# EUROPÄISCHE PATENTSCHRIFT

(11) **EP 1 488 298 B1**
(45) Veröffentlichungstag und Bekanntmachung des Hinweises auf die Patenterteilung: **06.09.2006**
(21) Anmeldenummer: 02787398.3
(22) Anmeldetag: 26.11.2002
(51) Int. Cl.: G05G 1/14

(54) **PEDALMODUL**
PEDAL SUBASSEMBLY
MODULE DE PEDALE

(30) Priorität: 20.02.2002 DE 10207047
(43) Veröffentlichungstag der Anmeldung: 22.12.2004
(73) Patentinhaber: ROBERT BOSCH GMBH, 70442 Stuttgart (DE)
(72) Erfinder: SEITZINGER, Helmut, 73614 Schorndorf (DE)
(86) Internationale Anmeldenummer: PCT/DE2002/004332
(87) Internationale Veröffentlichungsnummer: WO 2003/071374

(56) Entgegenhaltungen:
- DE-A- 10 021 532
- US-A- 3 818 292
- US-A- 4 364 022
- US-A- 5 774 042

## Beschreibung

### Stand der Technik

Die Erfindung betrifft ein Pedalmodul für ein Fahrzeug der im Oberbegriff des Anspruchs 1 definierten Gattung.

Bei einem bekannten Fahrpedalmodul (DE 100 21 532 A1) ist das Schwenklager durch einen Lagerbolzen realisiert, der mit quer zur Fahrzeuglängsrichtung ausgerichteter Bolzenachse in einem fahrzeugfesten Lagerbock gehalten ist. Das Fahrpedal ist mittels einer Schraubendruckfeder an dem Lagerbock so abgestützt, daß es gegen die Rückstellkraft der Schraubendruckfeder betätigt werden muß und die Schraubendruckfeder das vom Fahrerfuß freigegebene Fahrpedal in eine Leerlaufposition zurückstellt, in der das Fahrpedal mit seinem Anschlag an dem im Lagerbock positionierten Gegenanschlag anliegt. Der maximale Schwenkweg des Fahrpedals wird durch einen ebenfalls am Lagerbock ausgebildeten, vom Gegenanschlag abgekehrten, weiteren Gegenanschlag begrenzt, an dem sich das Fahrpedal mit einem weiteren Anschlag anzulehnen vermag. Die Schraubendruckfeder ist in jeweils einer im Lagerbock und im Fahrpedal eingearbeiteten Vertiefung aufgenommen, so daß ein Ausknicken der Schraubendruckfeder bei der Fahrpedalbetätigung vermieden wird.

### Vorteile der Erfindung

Das erfindungsgemäße Pedalmodul mit den Merkmalen des Anspruchs 1 hat den Vorteil, daß die beiden Permanentmagnete eine Dämpfung des Pedals beim Einlaufen in eine nichtbetätigte Grundposition erzeugen, da sie mit zunehmender Annäherung des Pedals an seine Grundposition zwischen sich eine stetig wachsende Kraft aufbauen, die der Annäherung entgegenwirkt. Eine solche Dämpfung des Pedals beim Einlaufen in seine Grundposition verhindert Schnappgeräusche, die ansonsten beim schnellen Freigeben des Pedals entstehen. Gegenüber herkömmlichen Dämpfungsgliedern, die z. B. als Puffer aus Gummi oder anderen elastischen Materialien ausgebildet sind, hat die erfindungsgemäße Permanentmagnet-Dämpfung den Vorteil, daß sie auch langfristig eine räumlich unveränderte Grundposition sicherstellt, hingegen Gummipuffer u. ä. bei längerem Gebrauch zum Setzen neigen, und dadurch die Grundposition sich langfristig verändert, was z.B. bei einem Fahrpedalmodul zur Veränderung der Leerlaufposition bzw. zu Fehlersignalen im Steuergerät führt.

Durch die in den weiteren Ansprüchen aufgeführten Maßnahmen sind vorteilhafte Weiterbildungen und Verbesserungen des im Anspruch 1 angegebenen Pedalmoduls möglich.

### Zeichnung

Die Erfindung ist anhand eines in der Zeichnung dargestellten Ausführungsbeispiels in der nachfolgenden Beschreibung näher erläutert. Dabei zeigt die Zeichnung in schematischer Darstellung eine Seitenansicht eines Fahrpedalmoduls, teilweise geschnitten.

### Beschreibung des Ausführungsbeispiels

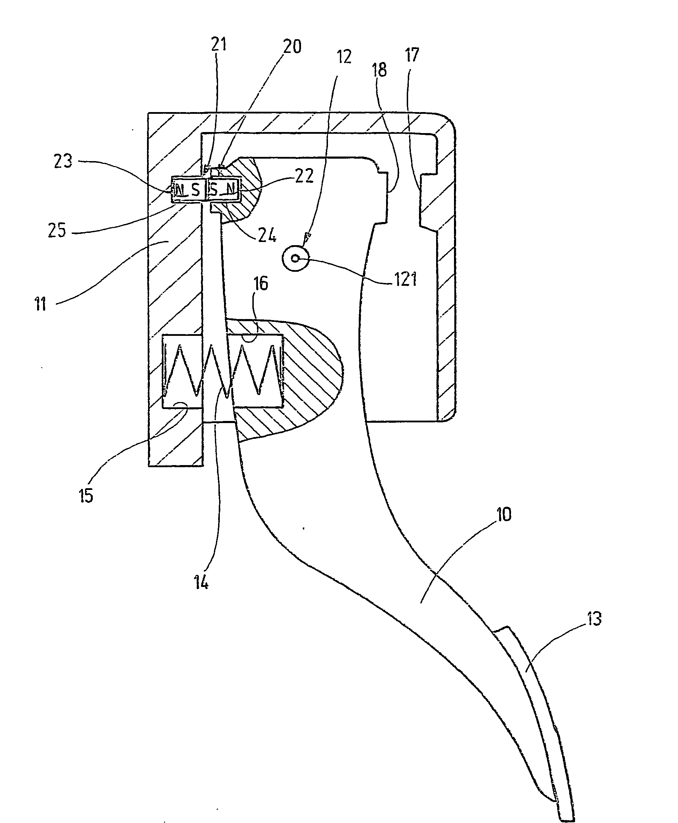

Das in Fig. 1 als Ausführungsbeispiel für ein allgemeines Pedalmodul in Seitenansicht teilweise geschnitten zu sehende Fahrpedalmodul dient zur Einstellung der Fahrgeschwindigkeit eines Fahrzeugs mit Antriebsmaschine durch den Fahrer. Die Antriebsmaschine ist beispielsweise ein Ottomotor, dessen Drosselklappe mit einem elektrischen Stellmotor verstellt wird. In diesem Fall dient das Fahrpedalmodul zur Erzeugung von elektrischen Signalen, die dem die Drosselklappe verstellenden Stellmodul zugeführt werden. Die Antriebsmaschine kann aber auch ein Dieselmotor oder ein Elektromotor sein, wobei auch in diesen Fällen vom Fahrpedalmodul elektrische Signale ausgehen, die entsprechend umgeformt die Leistung der Antriebsmaschine steuern. Ein Sensor, auf dessen Darstellung in der Zeichnung verzichtet worden ist, sensiert dabei die Stellung des Fahrpedals innerhalb seines Schwenkwegs und liefert ein der Stellung des Fahrpedals entsprechendes Signal an eine Steuerung. Das Fahrpedalmodul ist fahrzeugfest im Aktionsbereich des Fahrers des Fahrzeugs angeordnet.

Das Fahrpedalmodul weist einen fahrzeugseitig befestigten Lagerbock 11 auf, in dem ein Fahrpedal 10 mittels eines durch einen Lagerbolzen realisierten Schwenklagers 12 schwenkbar gehalten ist, wobei die Schwenk- oder Bolzenachse 121 quer zur Fahrzeuglängsrichtung ausgerichtet ist. Das Fahrpedal wird vom Fahrerfuß betätigt und trägt hierzu an seinem freien Ende eine Fußabstützplatte 13. In Sonderfällen kann das Fahrpedal 10 auch für Handbetätigung konzipiert sein.

Das Fahrpedal 10 ist mittels einer im Ausführungsbeispiel als Schraubendruckfeder ausgebildeten Rückstellfeder 14 an dem Lagerbock 11 so abgestützt, daß die Rückstellkraft der Rückstellfeder 14 das vom Fahrerfuß freigegebene Fahrpedal 10 in die in der Zeichnung dargestellte Leerlaufposition zurückstellt. Die Rückstellfeder 14 ist dabei endseitig in zwei einander gegenüberliegenden Vertiefungen 15, 16 eingesetzt, von denen die Vertiefung 15 in dem Lagerbock 11 und die Vertiefung 16 in dem Fahrpedal 10 eingearbeitet ist, und stützt sich im Grunde der Vertiefungen 15, 16 ab. Die Vertiefungen 15, 16 dienen zum Führen der Rückstellfeder 14 und verhindern ein seitliches Ausknicken der Rückstellfeder 14 bei der Fahrpedalbetätigung. Der maximale Schwenkweg des Fahrpedals 10 ist durch einen am Lagerbock 11 ausgebildeten Gegenanschlag 17 begrenzt, an dem das Fahrpedal 10 mit einem Anschlag 18 anstößt, den das Fahrpedal 10 auf seinem von der Fußabstützplatte 13 abgekehrten Pedalende trägt. Der Anschlag 18 ist dabei auf derselben Seite des Fahrpedals 10 angeordnet, auf der auch die Fußabstützplatte 13 liegt.

Die Leerlaufposition des Fahrpedals 10 wird durch einen weiteren Anschlag 20 und Gegenanschlag 21 festgelegt, die auf der vom Anschlag 18 abgekehrten Seite des Fahrpedals 10 angeordnet sind. Dabei wird wiederum der Anschlag 20 von dem Fahrpedal 10 getragen, während der Gegenanschlag 21 sich am Lagerbock 11 befindet. Anschlag 20 und Gegenanschlag 21 werden mittels zweier Permanentmagnete 22, 23 realisiert, die in jeweils einer Ausnehmung 24 bzw. 25 im Fahrpedal 10 bzw. im Lagerbock 11 eingesetzt sind. Die beiden Ausnehmungen 24, 25 sind so ausgeführt, daß in der Leerlaufposition des Fahrpedals 10 ihre Öffnungen einander zugekehrt sind und ihre Achsen etwa miteinander fluchten. Die Permanentmagnete 22, 23 sind so in die Ausnehmungen 24, 25 eingesetzt und darin festgelegt, daß gleichsinnige oder gleichnamige Magnetpole N, S einander zugekehrt sind, also - wie in der Zeichnung dargestellt ist - beispielsweise die Südpole S der beiden Permanentmagnete 22, 23 einander gegenüberliegen, so daß zwischen den Permanentmagneten 22, 23 eine die Permanentmagnete 22, 23 voneinander abstoßende Kraft hervorgerufen wird, die mit zunehmender Annäherung der beiden Permanentmagnete 22, 23 anwächst. Diese Abstoßkraft zwischen den Permanentmagneten 22, 23 erzeugt eine Dämpfung des Fahrpedals 10 beim Einlaufen in seine Leerlaufposition und verhindert, daß das von der Rückstellfeder 14 nach Freigeben des Fahrpedals 10 zurückgeschwenkte Fahrpedal 10 mit lautem Schnapp- oder Schlaggeräusch auf dem Lagerbock 11 auftrifft.

Die Erfindung ist nicht auf das beschriebene Fahrpedalmodul beschränkt. Sie kann in gleich vorteilhafter Weise auch bei einem Bremspedal einer elektrischen Bremse oder bei einem Kupplungspedal einer elektrischen Kupplung oder einem sonstigen Hand- oder Fußpedal angewendet werden.

## Patentansprüche

1. Pedalmodul für ein Fahrzeug, mit einem Pedal (10), das in einem am Fahrzeug festlegbaren Schwenklager (12) schwenkbar gehalten ist und einen Anschlag (20) trägt, der in einer vom unbetätigten Pedal (10) eingenommenen Grundposition an einem relativ zum Anschlag (20) feststehenden Gegenanschlag (21) anliegt, und mit einer Pedal-Rückstellvorrichtung, die eine das Pedal (10) in die Grundposition zurückschwenkende Rückstellkraft erzeugt, **dadurch gekennzeichnet, daß** Anschlag (20) und Gegenanschlag (21) von je einem Permanentmagneten (22, 23) gebildet sind und daß die Permanentmagnete (22, 23) so ausgerichtet sind, daß gleichsinnige Magnetpole (S) einander zugekehrt sind.

2. Pedalmodul nach Anspruch 1, **dadurch gekennzeichnet, daß** das Schwenklager (12) in einem zur fahrzeugfesten Anordnung vorgesehenen Lagerbock (11) aufgenommen ist und daß die Permanentmagnete (22, 23) in Ausnehmungen (24, 25) eingesetzt sind, die mit einander zugekehrten Öffnungen im Lagerbock (11) und im Pedal (10) eingearbeitet sind und in der Leerlaufposition des Pedals (10) im wesentlichen miteinander fluchten.

3. Pedalmodul nach Anspruch 1 oder 2, **dadurch gekennzeichnet, daß** die Pedal-Rückstellvorrichtung eine am Pedal (10) angreifende Rückstellfeder (14) aufweist.

4. Pedalmodul nach Anspruch 3, **dadurch gekennzeichnet, daß** die Rückstellfeder (14) als Druckfeder ausgebildet ist, die sich zwischen Lagerbock (11) und Pedal (10) abstützt.

5. Verwendung eines Pedalmoduls nach einem der Ansprüche 1 - 4 als Fahrpedalmodul zum Einstellen der Fahrgeschwindigkeit eines Fahrzeugs.

6. Anordnung eines Pedalmoduls nach einem der Ansprüche 1 - 4, **dadurch gekennzeichnet, daß** dieses als Bremspedal einer elektrischen Bremse oder als Kupplungspedal einer elektrischen Kupplung oder als sonstiges Fuß- oder Handpedal ausgebildet ist.

## Claims

1. Pedal module for a vehicle, with a pedal (10), which is held pivotably in a pivot bearing (12) which can be fixed on the vehicle, and bears a stop (20) which, in a basic position taken up by the unactuated pedal (10), bears against a counterstop (21) fixed relative to the stop (20), and with a pedal-resetting device which produces a resetting force pivoting the pedal (10) back into the basic position, **characterized in that** stop (20) and counterstop (21) are each formed by a permanent magnet (22, 23), and **in that** the permanent magnets (22, 23) are aligned in such a manner that equidirectional magnetic poles (S) face each other.

2. Pedal module according to Claim 1, **characterized in that** the pivot bearing (12) is accommodated in a bearing bracket (11) provided for arrangement fixed on the vehicle, and **in that** the permanent magnets (22, 23) are inserted into recesses (24, 25) which are incorporated with mutually facing openings in the bearing bracket (11) and in the pedal (10) and, in the idling position of the pedal (10), are essentially aligned with each other.

3. Pedal module according to Claim 1 or 2, **characterized in that** the pedal-resetting device has a resetting spring (14) acting on the pedal (10).

4. Pedal module according to Claim 3, **characterized in that** the resetting spring (14) is designed as a compression spring which is supported between bearing bracket (11) and pedal (10).

5. Use of a pedal module according to one of Claims 1-4 as an accelerator module for setting the driving speed of a vehicle.

6. Arrangement of a pedal module according to one of Claims 1-4, **characterized in that** the said pedal module is designed as a brake pedal of an electric brake or as a clutch pedal of an electric clutch or as another foot pedal or hand-operated pedal.

## Revendications

1. Module de pédale pour véhicule, comportant une pédale (10) montée pivotante dans un palier de pivotement (12) fixable dans le véhicule et ayant une butée (20) qui, dans une position de base prise par la pédale (10) non actionnée, est appliquée contre une contre-butée (21) fixe par rapport à la butée (20), et un dispositif de rappel de la pédale produisant une force de rappel qui rétablit la position de base de la pédale (10),
**caractérisé en ce que**
la butée (20) et la contre-butée (21) sont constituées chacune par un aimant permanent (22, 23), et les aimants permanents (22, 23) sont alignés avec leurs pôles magnétiques (S) de même signe dirigés l'un vers l'autre.

2. Module de pédale selon la revendication 1,
**caractérisé en ce que**
le palier de pivotement (12) est logé dans un support de palier (11) prévu pour un dispositif fixe dans le véhicule, et les aimants permanents (22, 23) sont placés dans des logements (24, 25) pratiqués dans le support de palier (11) et dans la pédale (10) en présentant des ouvertures dirigées l'une vers l'autre et essentiellement alignées l'une par rapport l'autre dans la position non actionnée de la pédale (10).

3. Module de pédale selon la revendication 1 ou 2,
**caractérisé en ce que**
le dispositif de rappel de la pédale présente un ressort de rappel (14) agissant sur la pédale (10).

4. Module de pédale selon la revendication 3,
**caractérisé en ce que**
le ressort de rappel (14) est un ressort de pression en appui entre le support de palier (11) et la pédale (10) .

5. Utilisation d'un module de pédale selon l'une des revendications 1 à 4, comme module de pédale de conduite permettant de régler la vitesse de conduite d'un véhicule.

6. Dispositif d'un module de pédale selon l'une des revendications 1 à 4,
**caractérisé en ce que**
le module est une pédale de frein électrique ou une pédale d'embrayage électrique, ou bien une autre pédale à pied ou à main.
